# EUROPÄISCHE PATENTSCHRIFT

(11) **EP 3 565 988 B1**
(45) Veröffentlichungstag und Bekanntmachung des Hinweises auf die Patenterteilung: **24.02.2021**
(21) Anmeldenummer: 18700854.5
(22) Anmeldetag: 04.01.2018
(51) Int. Cl.: F16J 9/08, F16J 9/20

(54) **KOLBENRING MIT GESTUFTER LAUFFLÄCHE**
PISTON RING HAVING A STEPPED RUNNING SURFACE
SEGMENT DE PISTON PRÉSENTANT UNE SURFACE DE CONTACT À ÉPAULEMENT

(30) Priorität: 05.01.2017 DE 102017100173
(43) Veröffentlichungstag der Anmeldung: 13.11.2019
(73) Patentinhaber: Federal-Mogul Burscheid GmbH, 51399 Burscheid (DE)
(72) Erfinder: GILLEN, Jürgen, 51371 Leverkusen (DE); RUCH, Fabian, 51375 Leverkusen (DE); PRÖPPER, Jörn, 51375 Leverkusen (DE)
(74) Vertreter: Becker & Kurig Partnerschaft Patentanwälte PartmbB
(86) Internationale Anmeldenummer: PCT/EP2018/050198
(87) Internationale Veröffentlichungsnummer: WO 2018/127534

(56) Entgegenhaltungen:
- EP-A1- 3 056 775
- WO-A1-2014/072115
- WO-A1-2016/136202
- DE-A1-102013 205 908
- DE-A1-102015 109 781
- DE-C1- 4 300 531
- US-A- 4 040 637

## Beschreibung

Die vorliegende Erfindung betrifft einen Kompressions-Kolbenring, der als Stufenring ausgeführt ist. Der Kolbenring weist an einer Unterseite, die einem Brennraum abgewandt ist, einen größeren Durchmesser auf als an einer Oberseite, die dem Brennraum zugewandt ist.

Es sind seit längerem Nasen-Kolbenringe bekannt, die an einer äußeren Unterkante einen Einschnitt aufweisen, um kleine Mengen abgestreiftes Öl unterzubringen. Diese Nasenringe werden vorwiegend als Nasen-Minutenringe in der Position des mittleren Kolbenrings eingesetzt.

Die vorliegende Erfindung betrifft einen Kolbenring, bei dem die "Nase" jedoch an einer oberen Kante des Kolbenrings angeordnet ist. Es besteht bisher oft ein Problem, dass bei einem oberen Kompressionsring, ein Anpressdruck durch Brenngase, die hinter den Kolbenring gelangen, ein zu großer Anpressdruck erzeugt wird. Durch einen zu großen Anpressdruck kann der Verschleiß des Kolbenrings an der Lauffläche zunehmen.

Es ist daher wünschenswert, einen Kolbenring zur Verfügung zu stellen, dessen Anpressdruck weniger stark von dem Druck der Brenngase abhängt.

EP 2884136 A1 offenbart einen Kompressions-Stufen-Kolbenring gemäß dem Oberbegriff des Anspruchs 1.

Gemäß der vorliegenden Erfindung wird angegeben ein Stufen-Kolbenring, der eine Lauffläche, eine obere Ringflanke und eine untere Ringflanke umfasst, wobei die Lauffläche an einer Oberkante eine Aussparung aufweist. In dem Bereich der Aussparung können Brenngase zwischen dem Kolbenring und einer Zylinderinnenwand eindringen. Gleichzeitig können die Brenngase durch einen Spalt zwischen der oberen (brennraumseitigen) Kolbenringflanke und der oberen Kolbenringnutflanke hinter den Kolbenring gelangen. Die Brenngase hinter dem Kolbenring drücken den Kolbenring stärker gegen die Zylinderinnenfläche. Die Brenngase in dem Bereich der Aussparung üben durch ihren Druck eine Kraft aus, die radial nach innen gerichtet ist. Diese Kräfte wirken dabei entgegengesetzt. Dadurch soll der Ring im Betrieb einer geringeren Belastung unterworfen sein, wodurch der Verschleiß des Ringes verringert werden kann.

Die Aussparung oder die Stufe endet in Umfangsrichtung vor den jeweiligen Stoßenden. Bevorzugt ist eine Innenfase oder ein Innenwinkel zwischen der oberen Ringflanke und einer Kolbenringinnenfläche. Bevorzugt ist ein Verschleißschutz an der Ringaußenseite und/oder der Lauffläche. Die Stufe ist bevorzugt durch eine aufgetragene Verschleißschutzschicht gebildet. Bevorzugt ist die obere Ringflanke mit einem Verschleißschutz versehen und/oder die untere Ringflanke mit einem Verschleißschutz versehen. Ferner hat die Lauffläche bevorzugt eine Balligkeit mit zwei gleichen oder unterschiedlichen Krümmungsradien (R_{bo}, R_{bu}) zwischen 1 mm und 25 mm, bevorzugt zwischen 5 mm und 20 mm. Ferner weist bevorzugt die Aussparung (10) eine Konizität mit einem Winkel (β) zwischen 0,5° und 5°, bevorzugt 2° und 4° auf. Schließlich weist die untere Laufflächenkante einen Winkel (δ) zwischen 30° und 60° und ein axiales Maß (Hk) zwischen 0,03 mm und 0,12 mm auf,

Die Ringaußenfläche des Kolbenrings bildet durch die Aussparung eine Stufe, mit einer einspringenden Kante und einer vorspringenden Kante. Zwischen den Kanten wird eine Flanke gebildet. Die Stufe wird hier so ausgebildet, dass die obere Stufenfläche gegenüber der Zylinderinnenfläche in Radialrichtung zurückgesetzt ist. Die untere Stufenfläche in Radialrichtung bildet die Lauffläche, die direkt mit einer Zylinderinnenfläche in Kontakt stehen soll und deren größter Außendurchmesser bevorzugt nicht an einer Kante der unteren Stufenfläche zu liegen kommt, sondern vielmehr in einem mittleren Bereich dieser Stufenfläche. Allerdings ist auch denkbar, dass der größte Durchmesser an der unteren Kannte der Stufenhöhe anliegt. Die Breite der oberen Stufenfläche wird im folgenden Stufenbreite genannt und verläuft in Axialrichtung. Die Breite der unteren Stufenfläche wird im Weiteren als Stufentiefe bezeichnet. Die Stufenhöhe bezeichnet den Unterschied der Radien der Stufen. Der Übergang zwischen der oberen Stufenfläche und der unteren Stufenfläche wird im Folgenden als Stufenflanke bezeichnet. Bei einer weiteren beispielhaften Ausführungsform der vorliegenden Erfindung weist die Aussparung eine radiale Höhe (Hr) von mindestens 0,03 mm auf. Bei einer anderen beispielhaften Ausführungsform des vorliegenden Stufenrings weist die Stufe einen Flankenwinkel (α) zwischen 10° und 70°, bevorzugt zwischen 20° und 60°, besonders bevorzugt zwischen 35° und 55° auf. Der Flankenwinkel wird hier zu einer Fläche bestimmt, die senkrecht zu einer Symmetrieachse bzw. der Axialrichtung des Kolbenrings verläuft, sodass ein Flankenwinkel von 0° einer normalen Stufe mit 90°-Winkeln entspricht. Der Flankenwinkel kann dazu beitragen die Bearbeitbarkeit des Kolbenrings zu verbessern. Zusätzlich kann ein relativ großer Flankenwinkel die Druckverteilung der Brenngase positiv beeinflussen. Weiterhin kann ein großer Flankenwinkel das Ölabstreifverhalten positiv beeinflussen. Ein größerer Flankenwinkel kann zudem eine Kerbwirkung an der einspringenden Kante verringern.

Eine zusätzliche beispielhafte Ausführungsform des vorliegenden Stufenrings weist an der vorspringenden Kante der Stufe einen Verrundungsradius (Ru) zwischen 0,05 mm und 0,2 mm auf.

Noch eine beispielhafte Ausführungsform des vorliegenden Stufenrings weist an der einspringenden Kante der Stufe einen Verrundungsradius (Ro) zwischen 0,05 mm und 0,2 mm auf.

Die Verrundung an der einspringenden Kante trägt wesentlich zu einer Verringerung von Kerbwirkungseffekten des Kolbenrings im Betrieb bei. Die Verrundung und insbesondere der Verrundungsradius in Kombination mit dem Flankenwinkel der Stufenflanke bestimmt maßgeblich das Ölabstreifverhalten bzw. das Aufschwimmen des Kolbenrings auf einem vorhandenen Ölfilm bei einer Aufwärtsbewegung des Kolbens.

Die Aussparung oder die Stufe endet in Umfangsrichtung vor jeweiligen Stoßenden. Die Ausnehmung endet vor den Stoßenden, um Blowby-Effekte durch den Ringstoß zu verringern. Die Stufenhöhe wird bei dieser Ausführung vor dem Stoßenden auf null reduziert, um zu verhindern, dass die Ausnehmung als ein Kanal wirkt, der Brenngase in Richtung des Stoßes leitet und so zu einem erhöhten Blowby beiträgt.

Bei einer anderen beispielhaften Ausführungsform des vorliegenden Stufenrings verläuft die einspringende Kante unterhalb einer halben axialen Höhe des Kolbenrings. Die Stufentiefe der unteren Stufenfläche beträgt dabei mindestens 50% einer Gesamthöhe des Kolbenrings, bevorzugt aber 5 bis 30% der Gesamthöhe eines Kolbenringes. Es ist aber auch denkbar, das Einspringen der Kante oberhalb der halben axialen Ringhöhe (ca. 3/4) vorzunehmen und damit eine Stufenfläche bis zu 70% zu erhalten.

Eine zusätzliche beispielhafte Ausführungsform des vorliegenden Stufenrings ist so aufgebaut, dass sich die vorspringende Kante unterhalb eines Drittels der Höhe des Kolbenrings in Axialrichtung erstreckt. Diese relativ geringe axiale Ausdehnung wird durch eine relativ große axiale Ausdehnung des Übergangsbereich bzw. der Stufenflanke bedingt.

Noch eine beispielhafte Ausführungsform des vorliegenden Stufenrings umfasst weiter eine Innenfase oder einen Innenwinkel zwischen der oberen Ringflanke und einer Kolbenringinnenfläche auf. Die Ausnehmung bzw. die Stufe bewirkt ein Twisten des Kolbenrings, Durch die entsprechende Innenfase oder den Innenwinkel kann dieser Twistneigung entgegengewirkt werden.

Vorzugsweise ist die Lauffläche des Kolbenrings weiter mit einer Verschleißschutzschicht versehen.

Bei einer weiteren beispielhaften Ausführungsform der vorliegenden Erfindung ist die Stufe selbst durch eine aufgetragene Verschleißschutzschicht gebildet. Die Lauffläche ist dabei nur an einem unteren Teil der Lauffläche beschichtet. Da die untere Stufenfläche nicht mit einer Kolbeninnenfläche in Kontakt stehen soll, kann hier kostspieliges Beschichtungsmaterial eingespart werden.

Bei einer anderen beispielhaften Ausführungsform des vorliegenden Stufenrings sind die untere und/oder die obere Ringflanke mit einem Verschleißschutz versehen. Der Verschleißschutz kann hier durch eine Nitrierung ausgeführt sein, oder durch eine gesondert aufgetragene Verschleißschutzschicht.

Eine zusätzliche beispielhafte Ausführungsform des vorliegenden Stufenring ist an der oberen Ringflanke mit den Buchstaben "TOP" gekennzeichnet, um eine Oberseite des Kolbenrings zu kennzeichnen, und/oder ist an der oberen Ringflanke durch die Buchstaben "TOP" als oberer Kompressionsring gekennzeichnet. Die vorliegende Erfindung betrifft einen Kompressionsring, der üblicherweise als oberer oder Topring eingesetzt wird, damit der Ring ebenfalls in der richtigen Orientierung in die Kolbenringnut eingelegt wird, kann die obere Ringflanke ebenfalls mit der Bezeichnung "Top" versehen sein.

Eine andere beispielhafte Ausführungsform des Stufen-Kolbenrings umfasst eine Lauffläche an dem unteren Teil der Ringaußenseite, die eine Balligkeit mit einem Krümmungsradius zwischen 1mm und 25mm, bevorzugt zwischen 5mm und 20mm und weiter bevorzugt zwischen 7 und 17mm aufweist. Es ist ebenfalls in einer zusätzlichen Ausführungsform vorgesehen, dass der untere Teil der Ringaußenseite, der eine Lauffläche bildet, zwei verschiedene Balligkeiten mit zwei verschiedenen Krümmungsradien (R_{bo} , R_{bu}) aufweist. Hier nehmen Krümmungsradien der Balligkeiten Werte zwischen 1mm und 25mm, bevorzugt zwischen 5mm und 20mm und weiter bevorzugt zwischen 7 und 17mm an. Es ist zudem vorgesehen, dass im Falle von Laufflächen mit zwei Krümmungsradien ein unterer Krümmungsradius mindestens doppelt so groß ist wie ein oberer Krümmungsradius. Es ist weiter vorgesehen, dass im Falle von Laufflächen mit zwei Krümmungsradien diese stetig und glatt ineinander übergehen. Es ist zudem vorgesehen, dass die Lauffläche ballig ausgeführt ist, und einen größten Durchmesser aufweist, wobei die beiden Krümmungsradien der Balligkeiten am größten Durchmesser der Lauffläche ineinander übergehen.

Gemäß einer zusätzlichen Ausführung des Stufen-Kolbenrings ist zwischen der unteren Laufflächenkante und der unteren Ringflanke eine Fase angeordnet, die in Axialrichtung eine Fasenhöhe zwischen 0,02 mm und 0,15 mm, bevorzugt zwischen 0,03 mm und 0,12 mm und weiter bevorzugt zwischen 0,04 mm und 0,1 mm aufweist und einen Fasenwinkel (δ) zwischen 25° und 65°, bevorzugt zwischen 30° und 60°, und weiter bevorzugt zwischen 35 und 55° aufweist. Die Fase dient dazu, Öl abzustreifen bzw. bei einer Abwärtsbewegung des Kolbens einen definierten Ölfilm zu erzeugen auf dem dieser und eventuell ein darüber liegender Kompressionsring gleiten kann.

Im Folgenden wird die vorliegende Erfindung anhand der Zeichnung von schematischen dargestellten Figuren näher veranschaulicht..
Figuren 1 bis 3 stellen Schnittansichten und vergrößerte Details eines erfindungsgemäßen Stufen-Kolbenringes dar.
Figur 4 zeigt eine Aufsicht auf einen erfindungsgemäßen Stufen-Kolbenring in einer Aufsicht, die den Verlauf der Stufe in Umfangsrichtung darstellt.

Sowohl in der Beschreibung als auch in den Figuren werden gleiche oder ähnliche Bezugszeichen verwendet, um auf gleiche oder ähnliche Elemente und Komponenten Bezug zu nehmen.

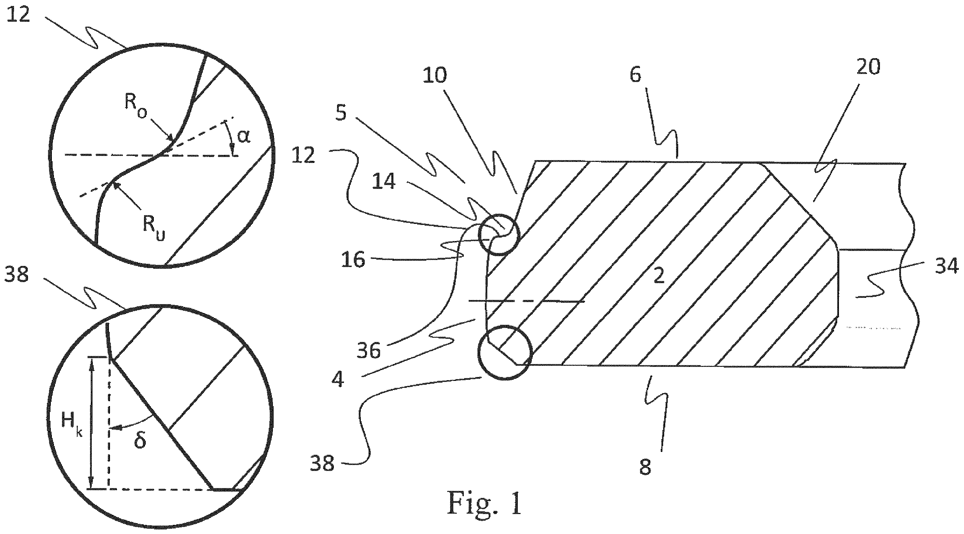

Figur 1 zeigt eine Schnittansicht durch einen erfindungsgemäßen Stufen-Kolbenring 2, wobei auf der linken Seite zwei Detailvergrößerungen der Stufenbereiche dargestellt sind. Der Stufen-Kolbenring umfasst eine Ringaußenfläche oder Ringaußenseite 5, die in einem unteren Bereich eine Lauffläche 4 bildet. In einem oberen Bereich umfasst die Ringaußenseite 5 eine Aussparung 10, sodass zwischen der Lauffläche 4 und der Ringaußenseite 5 eine Stufe 12 gebildet wird. Die Höhe der Stufe wird durch die radiale Höhe der Stufe Hr bestimmt. Durch die Ausnehmung 10 können Brenngase von außen gegen den Kolbenring drücken, und so eine Kraft auf den Kolbenring ausüben, die einer Kraft entgegenwirkt, die von Brenngasen erzeugt wird, die auf eine Kolbenringinnenfläche 34 wirken und den Kolbenring gegen eine (nicht dargestellte) Kolbeninnenwand drücken. Der Stufen-Kolbenring 2 umfasst eine, einem Brennraum zugewandte obere Kolbenringflanke 6, und eine, einem Brennraum abgewandte, untere Kolbenringflanke 8. Innen ist der Kolbenring von einer Kolbenringinnenfläche 34 begrenzt. Die Stufe 12 ist in der Vergrößerung dargestellt. Die Stufe umfasst eine vorspringende Kante 16 an der oberen Seite der Lauffläche 4. Die vorspringende Kante 16 kann mit einem Verrundungsradius Ru verrundet sein. Die Größe des Verrundungsradius Ru bestimmt wesentlich eine Ölabstreifeigenschaft bzw. die Eigenschaft wie leicht der Kolbenring auf einem vorhandenen Ölfilm aufschwimmen kann. Ein weiterer Faktor, der die Reibung und das Aufschwimm- bzw. Abstreifverhalten beeinflusst, ist die Flankensteilheit oder Flankenneigung oder der Flankenwinkel α. Der Flankenwinkel wird in einer Fläche gemessen, in der die axiale Symmetrieachse liegt, und gegenüber einer Fläche gemessen, die senkrecht zu der Axialrichtung verläuft. Ein Flankenwinkel von 0° entspricht dabei einer senkrechten Stufe und ein Flankenwinkel von 60° entspricht einem eher sanften Übergang von der untern Stufe zur Lauffläche.

Die einspringende Kante 14 kann mit einem Verrundungsradius Ro verrundet sein. Die Größe des Verrundungsradius Ro bestimmt im Wesentlichen wie stark sich der Druck der Brenngase an der unteren Kante auswirkt. Bei einem hohen Flankenwinkel wird der Effekt der Brenngase von oben nach unten langsam verringert.

In der unteren Detailvergrößerung ist die untere Laufflächenfase 38 dargestellt. Die Laufflächenfase 38 bestimmt deutlich ein Ölabstreifverhalten des Kolbenrings 2 bei einer Abwärtsbewegung des Kolbens. Die untere Laufflächenfase 38 weist eine Axiale Höhe Hₖ auf, die hier etwa 0,08 mm betragen soll. Die untere Laufflächenfase 38 weist hier einen Fasenwinkel von ca. 40° zur Axialrichtung auf. Die untere Laufflächenfase beeinflusst eher das Ölabstreifverhalten denn ein Twisten des Kolbenrings in der Kolbenringnut

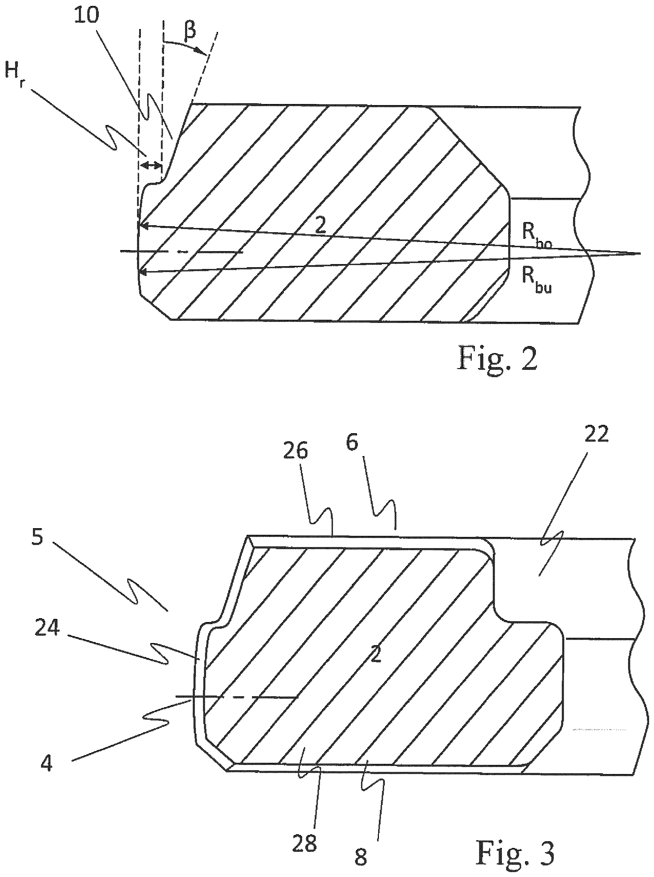

Der in Fig. 2 dargestellte Stufen-Kolbenring 2 hat eine Balligkeit der Außenfläche 5 bzw. der äußeren Stufenfläche des Kolbenrings mit zwei verschiedenen Krümmungsradien. Der maximale Durchmesser des Kolbenrings ist durch die Strichpunktlinie dargestellt. Oberhalb des maximalen Durchmessers weist die Lauffläche 4 eine obere Balligkeit R_{bo} auf, die einen Krümmungsradius aufweist, der mindestens 50% kleiner ist als eine untere Balligkeit R_{bu} der Lauffläche 4 unterhalb des maximalen Durchmessers.

Die Figur 2 zeigt zudem eine Ausnehmung 10, mit der radialen Stufenhöhe Hᵣ. Eine Mantelfläche der Ausnehmung des Stufen-Kolbenrings 4 bildet hier im Wesentlichen eine Kegelfläche (die Abweichung von der Kegelfläche liegt innerhalb der Mess- und Fertigungstoleranzen und gilt bis auf die Stoßenden des Kolbenrings).

In der Ausführung der Figur 2 ist die Stufenhöhe bzw. die radiale Höhe der Stufe Hᵣ durch den Unterschied der Radien R_{bo} und den Radius der unteren Kegelstumpffäche bestimmt, die die Mantelfläche der Ausnehmung 10 definiert.

Fig. 3 stellt eine Ausführungsform eines Stufen-Kolbenrings dar, bei dem eine Ringaußenfläche durch eine aufgetragene Verschleißschutzschicht 24 geschützt ist. Die Lauffläche ist in Figur 3 ebenfalls ballig mit zwei verschiedenen Verrundungsradien ausgeführt. Weiterhin ist anstelle der oberen Innenfase ein oberer Innenwinkel 22 vorgesehen, der die Twisteingenschaften des Kolbenrings beeinflusst.

Die obere Kolbenringflanke 6 ist mit einer oberen Verschleißschutzschicht 26 versehen. Die untere Kolbenringflanke 8 ist mit einer unteren Verschleißschutzschicht 28 versehen.

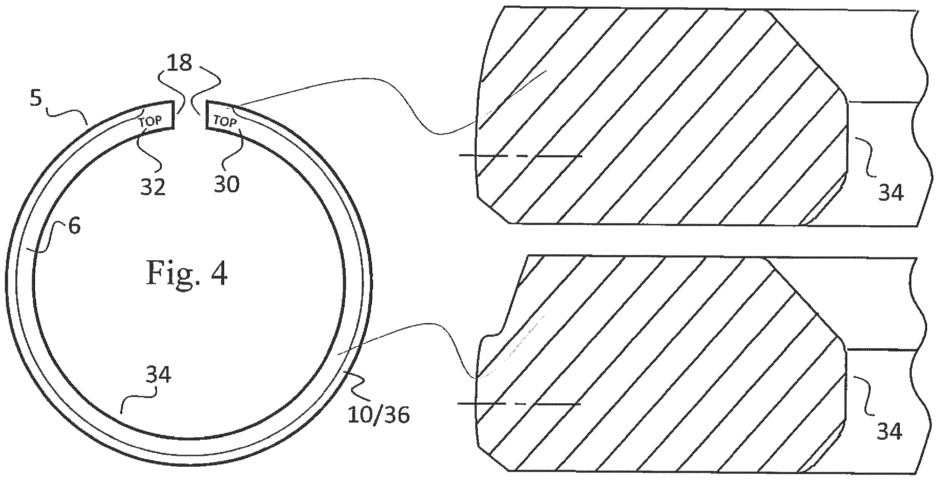

Figur 4 zeigt eine Aufsicht auf einen erfindungsgemäßen Stufen-Kolbenring dar, der einen Stoßbereich mit zwei Stoßenden 18 aufweist, wobei die Ausnehmung 10 und damit die sichtbare Stufenflanke 36 jeweils direkt vor den Stoßenden 18 enden. Die Orientierung des Kolbenrings ist durch die Kennzeichnung 32 definiert, wobei "top" die zu dem Brennraum weisende obere Ringflanke 6 bezeichnet. Der Kolbenring ist durch die Kennzeichnung 30 "Top" als oberer Kompressionsring bzw. "Topring" gekennzeichnet.

Es kann noch angemerkt werden, dass der Kolbenring bevorzugt als Kompressionsring oder "Topring" ausgeführt ist.

Die Effekte der Aussparung 10 würden bei einem mittleren Kolbenring oder gar bei einem Ölabstreifring weit weniger zu Tage treten, da der Kompressionsring bereits den Hauptteil des Druckes in dem Spalt zwischen dem Kolben und dem Zylinder aufnimmt. Es ist daher auch bei dem mittleren und unteren Kolbenring der Einsatz bevorzugt, wenn auch nicht so wirksam die Effekte von heißen Brenngasen verringert werden, die den Kolbenring von der Kolbenringinnenfläche nach außen gegen eine Zylinderinnenfläche drücken.

### Bezugszeichenliste

- 2: Stufen-Kolbenring
- 4: Lauffläche
- 5: Ringaußenseite
- 6: obere Ringflanke
- 8: untere Ringflanke
- 10: Aussparung
- 12: Stufe
- 14: einspringende Kante
- 16: vorspringende Kante
- 18: Stoßendenden
- 20: Innenfase
- 22: Innenwinkel
- 24: Verschleißschutz an der Lauffläche
- 26: Verschleißschutz an der oberen Ringflanke
- 28: Verschleißschutz an der unteren Ringflanke
- 30: Top Kennzeichnung als Orientierungskennzeichnung
- 32: Top Kennzeichnung als Topring
- 34: Kolbenringinnenfläche
- 36: Stufenflanke
- 38: Untere Laufflächenfase
- Hk: Fasenhöhe der unteren Laufflächenfase in Axialrichtung
- Hr: radiale Höhe der Stufe
- α: Flankenwinkel
- β: Kegelwinkel der Mantelfläche der Ausnehmung
- δ: Fasenwinkel der unteren Laufflächenfase
- Rₒ: Verrundungsradius der einspringenden Kante
- Rᵤ: Verrundungsradius der vorspringenden Kante
- R_{bo}: Verrundungsradius / Krümmungsradius der Balligkeit einer oberen äußeren Lauf-bzw. Stufenfläche
- R_{bu}: Verrundungsradius / Krümmungsradius der Balligkeit einer unteren äußeren Lauf-bzw. Stufenfläche

## Patentansprüche

1. Kompressions-Stufen-Kolbenring (2), umfassend eine Ringaußenseite (5), eine obere Ringflanke (6), eine untere Ringflanke (8), wobei die Ringaußenseite (5) an der Oberkante eine Aussparung (10) aufweist, so dass nur ein unterer Teil der Ringaußenseite (5) eine Lauffläche (4) bildet, wobei die Aussparung (10) an der Ringaußenseite (5) in Axialrichtung eine Stufe (12) bildet, die eine einspringende Kante (14) und eine vorspringende Kante (16) bildet, und wobei die Aussparung (10) eine Konizität mit einem Winkel (β) zwischen 0,5° und 5°, bevorzugt 2° und 4° aufweist, **dadurch gekennzeichnet, dass** die Aussparung (10) oder die Stufe (12) in Umfangsrichtung vor den jeweiligen Stoßenden (18) endet.

2. Kompressions-Stufen-Kolbenring (2) nach Anspruch 1, wobei die Aussparung (10) eine radiale Höhe (Hr) von mindestens 0,03 mm aufweist.

3. Kompressions-Stufen-Kolbenring (2) nach Anspruch 1 oder 2, wobei die Stufe (12) einen Flankenwinkel (α) zwischen 10° und 70°, bevorzugt zwischen 20° und 60°, besonders bevorzugt zwischen 35° und 55° aufweist.

4. Kompressions-Stufen-Kolbenring (2) nach einem der Ansprüche 1 bis 3, wobei die vorspringende Kante (16) der Stufe (12) einen Verrundungsradius (Ru) zwischen 0,05 mm und 0,2 mm aufweist.

5. Kompressions-Stufen-Kolbenring (2) nach einem der Ansprüche 1 bis 4, wobei die einspringende Kante (14) der Stufe (12) einen Verrundungsradius (Ro) zwischen 0,05 mm und 0,2 mm aufweist.

6. Kompressions-Stufen-Kolbenring (2), nach einem der vorstehenden Ansprüchen, weiter umfassend eine Innenfase (20) oder einen Innenwinkel (22) zwischen der oberen Ringflanke (6) und einer Kolbenringinnenfläche (34).

7. Kompressions-Stufen-Kolbenring (2), nach einem der vorstehenden Ansprüche, weiter umfassend einen Verschleißschutz (24) an der Ringaußenseite (5) und/oder der Lauffläche (4).

8. Kompressions-Stufen-Kolbenring (2), nach Anspruch 7, wobei die Stufe (12) durch eine aufgetragene Verschleißschutzschicht (24) gebildet ist.

9. Kompressions-Stufen-Kolbenring (2), nach einem der vorstehenden Ansprüche, wobei die obere Ringflanke (6) mit einem Verschleißschutz (26) versehen ist und/oder wobei die untere Ringflanke (8) mit einem Verschleißschutz (28) versehen ist.

10. Kompressions-Stufen-Kolbenring (2), nach einem der vorstehenden Ansprüchen, wobei die Lauffläche (4) eine Balligkeit mit zwei gleichen oder unterschiedlichen Krümmungsradien (R_{bo}, R_{bu}) zwischen 1 mm und 25 mm, bevorzugt zwischen 5 mm und 20 mm aufweist.

11. Kompressions-Stufen-Kolbenring (2), nach einem der vorstehenden Ansprüche, wobei die obere Ringflanke (6) mit dem Buchstaben "TOP" (30) gekennzeichnet ist, um eine Oberseite zu kennzeichnen, und/oder der Kolbenring durch die Buchstaben "TOP" (32) als oberer Kompressionsring gekennzeichnet ist.

12. Kompressions-Stufen-Kolbenring (2) nach einem der vorstehenden Ansprüche, wobei eine untere Laufflächenkante (38) einen Winkel (δ) zwischen 30° und 60° und ein axiales Maß (Hk) zwischen 0,03 mm und 0,12 mm aufweist.

13. Kompressions-Stufen-Kolbenring (2) nach einem der vorstehenden Ansprüche, wobei die Aussparung (10) sich über einen axialen Bereich von 10% bis 50%, bevorzugt 30% bis 50% der axialen Gesamthöhe des Kolbenrings erstreckt.

## Claims

1. A compression stepped piston ring (2), comprising a ring outer side (5), an upper ring flank (6), a lower ring flank (8), wherein the ring outer side (5) has a notch (10) on the upper edge, so that only a lower portion of the ring outer side (5) forms a contact surface (4), wherein the notch (10) forms a step (12) on the ring outer side (5) in the axial direction that forms a re-entrant edge (14) and a projecting edge (16), and
wherein the notch (10) has a conicity with an angle (β) of between 0.5° and 5°, preferably 2° and 4°,
**characterized in that**
the notch (10) or the step (12) ends short of the respective gap ends (18) in the circumferential direction.

2. The compression stepped piston ring (2) as set forth in claim 1, wherein the notch (10) has a radial height (Hr) of at least 0.03 mm.

3. The compression stepped piston ring (2) as set forth in claim 1 or 2, wherein the step (12) has a flank angle (α) of between 10° and 70°, preferably between 20° and 60°, especially preferably between 35° and 55°.

4. The compression stepped piston ring (2) as set forth in any one of claims 1 to 3, wherein the projecting edge (16) of the step (12) has a blend radius (Ru) of between 0.05 mm and 0.2 mm.

5. The compression stepped piston ring (2) as set forth in any one of claims 1 to 4, wherein the re-entrant edge (14) of the step (12) has a blend radius (Ro) of between 0.05 mm and 0.2 mm.

6. The compression stepped piston ring (2) as set forth in any one of the preceding claims, further comprising an inner chamfer (20) or an internal angle (22) between the upper ring flank (6) and an inner surface (34) of the piston ring.

7. The compression stepped piston ring (2) as set forth in any one of the preceding claims, further comprising a wear protection means (24) on the ring outer side (5) and/or on the contact surface (4).

8. The compression stepped piston ring (2) as set forth in claim 7, wherein the step (12) is formed by an applied wear protection layer (24).

9. The compression stepped piston ring (2) as set forth in any one of the preceding claims, wherein the upper ring flank (6) is provided with a wear protection means (26) and/or wherein the lower ring flank (8) is provided with a wear protection means (28).

10. The compression stepped piston ring (2) as set forth in any one of the preceding claims, wherein the contact surface (4) has a convexity with two equal or different radii of curvature (R_{bo}, R_{bu}) of between 1 mm and 25 mm, preferably between 5 mm and 20 mm.

11. The compression stepped piston ring (2) as set forth in any one of the preceding claims, wherein the upper ring flank (6) is marked with the letters "TOP" (30) in order to denote a top side, and/or the piston ring is designated as an upper compression ring by the letters "TOP" (32).

12. The compression stepped piston ring (2) as set forth in any one of the preceding claims, wherein a lower edge (38) of the contact surface has an angle (β) of between 30° and 60° and an axial dimension (Hk) of between 0.03 mm and 0.12 mm.

13. The compression stepped piston ring (2) as set forth in any one of the preceding claims, wherein the notch (10) extends over an axial range between 10% to 50%, preferably 30% to 50% of the total axial height of the piston ring.

## Revendications

1. Segment de piston d'étage de compression (2), comprenant un côté extérieur de segment (5), un flanc supérieur de segment (6), un flanc inférieur de segment (8), dans lequel le côté extérieur de segment (5) présente sur le bord supérieur un évidement (10) de sorte que seule une partie inférieure du côté extérieur de segment (5) forme une surface de roulement (4), dans lequel l'évidement (10) sur le côté extérieur de l'anneau (5) dans la direction axiale forme un gradin (12) qui forme un bord rentrant (14) et un bord saillant (16), et dans lequel l'évidement (10) a une conicité avec un angle (β) compris entre 0,5° et 5°, de préférence 2° et 4°, **caractérisé en ce que** l'évidement (10) ou le gradin (12) se termine dans la direction circonférentielle devant les extrémités de butée respectives (18).

2. Segment de piston d'étage de compression (2) selon la revendication 1, dans lequel l'évidement (10) présente une hauteur radiale (Hr) d'au moins 0,03 mm.

3. Segment de piston d'étage de compression (2) selon la revendication 1 ou 2, dans lequel l'étage (12) présente un angle de flanc (α) compris entre 10° et 70°, de préférence entre 20° et 60°, de manière particulièrement préférée entre 35° et 55°.

4. Segment de piston d'étage de compression (2) selon une des revendications 1 à 3, dans lequel le bord saillant (16) du gradin (12) présente un rayon de courbure (Ru) compris entre 0,05 mm et 0,2 mm.

5. Segment de piston d'étage de compression (2) selon une quelconque des revendications 1 à 4, dans lequel le bord rentrant (14) du gradin (12) présente un rayon d'arrondi (Ro) compris entre 0,05 mm et 0,2 mm.

6. Segment de piston d'étage de compression (2) selon une des revendications précédentes, comprenant en outre un biseau interne (20) ou un angle interne (22) entre le flanc de segment supérieur (6) et une surface interne de segment de piston (34).

7. Segment de piston d'étage de compression (2), selon une des revendications précédentes, comprenant en outre une protection contre l'usure (24) du côté extérieur de segment (5) et/ou de la surface de roulement (4).

8. Segment de piston d'étage de compression (2) selon la revendication 7, dans lequel le gradin (12) est formé par une couche de protection contre l'usure appliquée (24) .

9. Segment de piston d'étage de compression (2), selon une des revendications précédentes, dans lequel le flanc de segment supérieur (6) est pourvu d'une protection contre l'usure (26) et/ou dans lequel le flanc de segment inférieur (8) est pourvu d'une protection contre l'usure (28).

10. Segment de piston d'étage de compression (2) selon une des revendications précédentes, dans lequel la surface de roulement (4) présente une convexité avec deux rayons de courbure identiques ou différents (R_{bo}, R_{bu}) compris entre 1 mm et 25 mm, de préférence entre 5 mm et 20 mm.

11. Segment de piston (2) d'étage de compression selon une des revendications précédentes, dans lequel le flanc de segment supérieur (6) est marqué de la lettre "TOP" (30) pour identifier un dessus, et/ou le segment de piston est marqué de la lettre "TOP" (32) comme le segment de compression supérieur.

12. Segment de piston d'étage de compression (2) selon une des revendications précédentes, dans lequel un bord de surface de roulement inférieur (38) présente un angle (δ) entre 30° et 60° et une dimension axiale (Hk) comprise entre 0,03 mm et 0,12 mm.

13. Segment de piston d'étage de compression (2) selon une des revendications précédentes, dans lequel l'évidement (10) s'étend sur une plage axiale de 10% à 50%, de préférence de 30% à 50% de la hauteur axiale totale du segment de piston.
